# EUROPEAN PATENT SPECIFICATION

(11) **EP 3 952 545 B1**
(45) Date of publication and mention of the grant of the patent: **30.10.2024**
(21) Application number: 20869773.0
(22) Date of filing: 29.09.2020
(51) Int. Cl.: H04W 72/04, H04L 1/18

(54) **SUBFRAME POSITION DETERMINATION METHOD AND APPARATUS, STORAGE MEDIUM, AND ELECTRONIC APPARATUS**
VERFAHREN UND VORRICHTUNG ZUR POSITIONSBESTIMMUNG EINES SUBFRAMES, SPEICHERMEDIUM UND ELEKTRONISCHES GERÄT
PROCÉDÉ ET APPAREIL DE DÉTERMINATION DE POSITION DE SOUS-TRAME, SUPPORT DE STOCKAGE ET APPAREIL ÉLECTRONIQUE

(30) Priority: 29.09.2019 CN 201910937038
(43) Date of publication of application: 09.02.2022
(73) Proprietor: Sanechips Technology Co., Ltd., Shenzhen, 518055 (CN)
(72) Inventor: HAN, Huben, Shenzhen, Guangdong 518057 (CN)
(74) Representative: Novagraaf Technologies
(86) International application number: PCT/CN2020/118827
(87) International publication number: WO 2021/058026

(56) References cited:
- WO-A1-2018/175446
- CN-A- 107 534 976
- CN-A- 108 141 322
- CN-A- 108 141 824
- CN-A- 109 923 914
- US-A1- 2017 118 747
- ZTE: "Remaining Issues on NB-PDCCH Design of NB-IoT", vol. RAN WG1, no. Sophia Antipolis, FRANCE; 20160322 - 20160324, 16 March 2016 (2016-03-16), XP051080976, Retrieved from the Internet <URL:http://www.3gpp.org/ftp/tsg_ran/WG1_RL1/TSGR1_AH/LTE_NB-IoT_1603/Docs/> [retrieved on 20160316]
- LG ELECTRONICS: "Summary of TDD Common aspects", vol. RAN WG1, no. Busan, Korea; 20180521 - 20180525, 24 May 2018 (2018-05-24), XP051463237, Retrieved from the Internet <URL:http://www.3gpp.org/ftp/tsg%5Fran/WG1%5FRL1/TSGR1%5F93/Docs> [retrieved on 20180524]
- INTEL CORPORATION: "Time-frequency relationships for physical channels for MTC", 3GPP DRAFT; R1-153995 - INTEL MTC TFREL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, China; 20150824 - 20150828, 23 August 2015 (2015-08-23), Mobile Competence Centre ; 650, route des Lucioles ; F-06921 Sophia-Antipolis Cedex ; France, XP051001402

## Description

### TECHNICAL FIELD

The present disclosure relates to the field of computer technology, for example, to a subframe position determination method and apparatus, a storage medium and an electronic apparatus.

### BACKGROUND

The narrow band Internet of Things (NB-IOT) is designed to enhance the coverage by 20dB (unit of power gain) on the basis of global system for mobile communications (GSM). Taking 144dB as the maximum coupling path loss of the GSM, the maximum coupling loss (MCL) of the NB-IOT design is 164dB, and the downlink obtain coverage enhancement mainly by increasing the maximum retransmission times of each channel. In the 3rd generation partnership project (3GPP) standard, the maximum number of repetitions may be up to 2048.

The value of the maximum number of repetitions (Rmax) in search space configuration in a narrow band (NB) may be set up to 2048, so the calculation amount required to calculate an end position based on a starting point or calculate the number of subframes between two points (starting point and current point) is quite large. It is similar when calculating the start time and end time of a narrowband physical downlink shared channel (NPDSCH). The start time of the NPDSCH is calculated based on an end subframe of a narrowband physical downlink control channel (NPDCCH) plus a configured delay time, and the maximum delay time may be configured to be 128. The maximum number of repetitions of the NPDSCH may be configured to be 2048, and the maximum number of subframes of the NPDSCH may be 10. In this way, the calculation amount required to calculate the end subframe of the NPDSCH based on a start subframe of the NPDSCH may be quite large.

In view of the problems of large calculation amount, complex operation, etc. existing in determining the positions of the start subframe and the end subframe of the subframes (such as NPDCCH and NPDSCH) in the related art, no effective technical solutions has been proposed yet.

Another example can be found in patent document US 2017/118747.

### SUMMARY

The invention is defined by the appended independent claims and further embodiments are described by the dependent claims.

### BRIEF DESCRIPTION OF THE DRAWINGS

The drawings described herein are used to provide an understanding of the present disclosure, which constitute a part of the present disclosure. The illustrative embodiments and descriptions of the present disclosure are used to explain the present disclosure, but do not constitute an improper limit to the present disclosure. In the accompanying drawings:
FIG. 1 is a block diagram illustrating a hardware structure of a computer terminal performing a subframe position determination method according to an embodiment of the present disclosure;
FIG. 2 is a flowchart illustrating an optional subframe position determination method according to an embodiment of the present disclosure;
FIG. 3 is a structural block diagram illustrating an optional subframe position determination apparatus according to an embodiment of the present disclosure;
FIG. 4 is a schematic structural diagram illustrating an optional subframe position according to an embodiment of the present disclosure.

### DETAILED DESCRIPTION

The present disclosure will be illustrated below with reference to the accompanying drawings and in combination with embodiments. The terms "first", "second", etc. in the specification and claims of the present disclosure and the above drawings are used to distinguish similar objects, but not necessarily used to describe the specified order or sequence.

Some embodiments of the present disclosure relate to calculation of start time and end time of a NB physical downlink control channel (NPDCCH) and start time and end time of a NB physical downlink shared channel (NPDSCH) by a physical (PHY) layer in a NB-IoT coverage enhancement scenario.

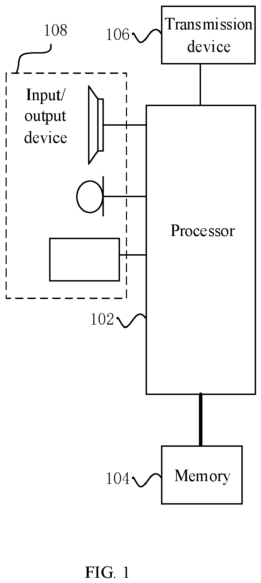

Some method embodiments provided by embodiments of the present disclosure may be executed in a computer terminal or similar computing apparatus. Taking running on the computer terminal as an example, FIG. 1 is a block diagram illustrating a hardware structure of a computer terminal performing a subframe position determination method according to an embodiment of the present disclosure. As shown in FIG. 1, a computer terminal 10 may include one or more (only one is shown in FIG. 1) processors 102 (the processors 102 may include, but are not limited to, processing devices such as a microcontroller unit (MCU) or a field programmable gate array (FPGA)) and a memory 104 configured to store data. Optionally, the mobile terminal may further include a transmission device 106 configured to perform communication and an input/output device 108. Those having ordinary skill in the art may understand that the structure shown in FIG. 1 is only for illustration but does not limit the structure of the terminal. For example, the mobile terminal 10 may further include more or fewer components than those shown in FIG. 1, or have different configurations with equivalent functions or more functions than those shown in FIG. 1.

The memory 104 may be configured to store computer programs, for example, a software program and a module for application software, such as a computer program corresponding to the subframe position determination method in the embodiment of the present disclosure. The processor 102 executes a variety of functional applications and performs data processing by running the computer programs stored in the memory 104, that is, realizes the above-mentioned method. The memory 104 may include a high-speed random access memory, and may also include a non-volatile memory, such as one or more magnetic storage devices, a flash memory, or other non-volatile solid-state memory. In some examples, the memory 104 may further include memories remotely provided from the processor 102, and these remote memories may be connected to the terminal 10 through a network. Examples of the aforementioned networks include, but are not limited to, the Internet, a corporate intranet, a local area network, a mobile communication network, and combinations thereof.

The transmission device 106 is configured to receive or transmit data via a network. The example of the foregoing network may include a wireless network provided by a communication provider of the terminal 10. In an example, the transmission device 106 includes a network interface controller (NIC), which may be connected with other network devices through a base station so as to communicate with the Internet. In an example, the transmission device 106 may be a radio frequency (RF) module, and the RF module is configured to wirelessly communicate with the Internet.

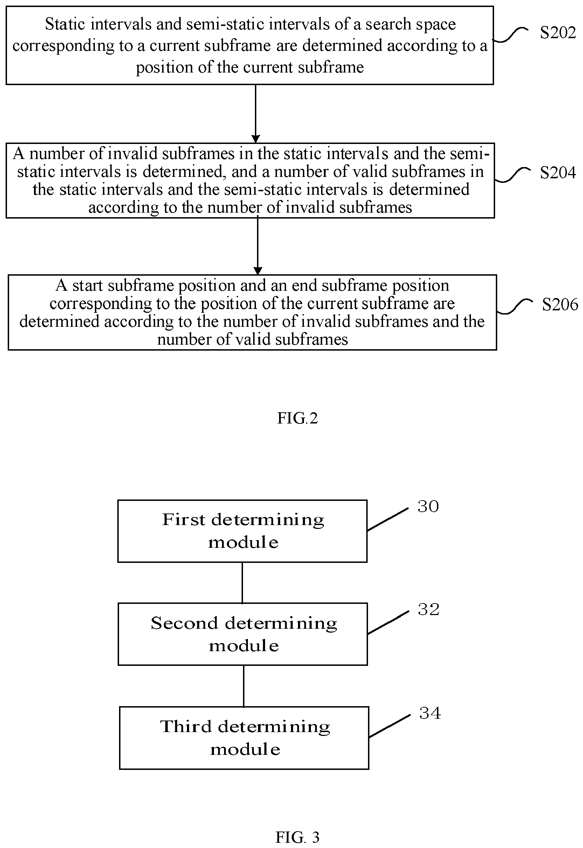

Some embodiments of the present disclosure provide a subframe position determination method running on the terminal shown in FIG. 1. FIG. 2 is a flowchart illustrating an optional subframe position determination method according to an embodiment of the present disclosure. As shown in FIG. 2, the method includes the following steps:

at step S202, determining static intervals and semi-static intervals of a search space corresponding to a current subframe according to a position of the current subframe.

at step S204, determining a number of invalid subframes in the static intervals and the semi-static intervals, and determining a number of valid subframes in the static intervals and the semi-static intervals according to the number of invalid subframes.

at step S206, determining a start subframe position and an end subframe position corresponding to the position of the current subframe according to the number of invalid subframes and the number of valid subframes.

According to the above technical scheme, the static intervals and the semi-static intervals of the search space corresponding to the current subframe is determined according to the position of the current subframe. The number of invalid subframes in the static intervals and the semi-static intervals is determined, and the number of valid subframes in the static intervals and the semi-static intervals is determined according to the number of invalid subframes. Further, the start subframe position and the end subframe position corresponding to the position of the current subframe are determined. By adopting the technical solution, the problems of large calculation amount, complex operation, etc. existing in determining the positions of the start subframe and the end subframe of the subframes (such as NPDCCH and NPDSCH) in the related art are solved. The present disclosure provides a scheme to determine the start subframe position and end subframe position of the subframe with a small amount of calculation and simple operation.

Optionally, the step S202 may be implemented in multiple ways. In an optional implementation, the maximum number of repetitions of subframe is preconfigured and obtained. A position of a temporary end subframe of the current subframe is obtained by adding the maximum number of repetitions to the position of the current subframe; the static intervals and the semi-static intervals are determined according to the position of the current subframe and the position of the temporary end subframe. Determining the static intervals and the semi-static intervals according to the position of the current subframe and the position of the temporary end subframe may be performed based on a preset cycle. The preconfigured maximum number of repetitions of subframe is obtained. The position of a temporary end subframe of the current subframe is obtained by adding the maximum number of repetitions to the position of the current subframe. The static intervals and the semi-static intervals are determined according to the position of the current subframe and the position of the temporary end subframe. Determining the static intervals and the semi-static intervals according to the position of the current subframe and the position of the temporarily end subframe may include determining the static intervals and the semi-static intervals between the position of the current subframe and the position of the temporary end subframe according to a preset cycle.

After the static intervals and semi-static intervals are determined, determining the number of invalid subframes in the static intervals and the semi-static intervals and determining the number of valid subframes in the static intervals and the semi-static intervals according to the number of invalid subframes may be achieved by the following technical solution in the embodiment of the present disclosure. A number of invalid subframes in the static intervals is determined, and a number of invalid subframes in the semi-static intervals is determined by traversing the semi-static intervals. After the number of invalid subframes in the static intervals and the number of invalid subframes in the semi-static intervals are determined, the number of valid subframes in the static intervals and the semi-static intervals is determined according to the number of invalid subframes in the static intervals and the number of invalid subframes in the semi-static intervals.

In a claimed embodiment, determining the number of invalid subframes in the static intervals and the semi-static intervals is achieved by the following technical scheme. A number of invalid subframes in first static intervals is determined according to a cycle of the static intervals and a type of the invalid subframes, and the number of invalid subframes in the first static intervals is taken as the number of invalid subframes in the static intervals. The semi-static intervals are divided into N second static intervals and M first semi-static intervals, where the M and the N are positive integers. A number of invalid subframes in the N second static intervals is determined according to a cycle of the N second static intervals and the type of the invalid subframes. A number of invalid subframes in the M first semi-static intervals is determined by traversing the semi-static intervals.

In the embodiment of the present disclosure, the sequence of steps of determining the number of invalid subframes in the first static intervals, determining the number of invalid subframes in the N second static intervals and determining the number of invalid subframes in the M first semi-static intervals is not limited.

Determining the number of valid subframes in the static intervals and the semi-static intervals according to the number of invalid subframes may be achieved by the following technical scheme. The number of valid subframes in the static intervals and the semi-static intervals is determined according to the number of invalid subframes in the first static intervals, the number of invalid subframes in the N second static intervals and the number of invalid subframes in the M first semi-static intervals.

The technical scheme of the embodiment of the present disclosure mainly relates to a time-domain scheduling calculation of the NPDCCH and NPDSCH of the physical layer PHY downlink. When calculating a NPDCCH search space, a NPDCCH start time and a hybrid automatic repeat request (HARQ) feedback time, it is determined to monitor positions of a start subframe and an end subframe of the NPDCCH or the NPDCCH are determined. In addition, it is further required to determine how many effective downlink subframes exist between the current subframe and the start subframe (the so-called effective downlink subframes are downlink subframes except a synchronization subframe, a system information block 1 (SIB1) subframe, a system information (SI) subframe, a GAP subframe and an invalid subframe indicated by a mask bitmap).

Through the description of the above embodiments, those having ordinary skill in the art may understand that the method according to the above embodiments may be implemented by means of software plus a general hardware platform, and certainly, it may also be realized by hardware. Based on such understanding, the technical solution of the present disclosure may be embodied in the form of a software product. The computer software product is stored in a storage medium (such as a read-only memory (ROM)/ a random access memory (RAM), a magnetic disk, an optical disk) and includes a plurality of instructions to make a terminal device (which may be a mobile phone, a personal computer, a server, or a network device, etc.) to execute the method described in multiple embodiments of the present disclosure.

Some embodiments of the present disclosure further provide a subframe position determination apparatus, which is used to implement the above embodiments and optional implementations, and the description thereof may not be repeated if it has been described. As used below, the term "module" may be a combination of software and hardware that realizes a predetermined function. Although the apparatus described in the following embodiments may be implemented in software, the implementation by hardware or a combination of software and hardware is also possible and contemplated.

FIG. 3 is a structural block diagram illustrating an optional subframe position determination apparatus according to an embodiment of the present disclosure. As shown in FIG. 3, the apparatus includes a first determining module 30configured to determine static intervals and semi-static intervals of a search space corresponding to a current subframe according to a position of the current subframe; a second determining module 32configured to determine a number of invalid subframes in the static intervals and the semi-static intervals, and determine a number of valid subframes in the static intervals and the semi-static intervals according to the number of invalid subframes; and a third determining module 34 configured to determine a start subframe position and an end subframe position corresponding to the position of the current subframe according to the number of invalid subframes and the number of valid subframes.

According to the above technical scheme, the static intervals and the semi-static intervals of the search space corresponding to the current subframe is determined according to the position of the current subframe. The number of invalid subframes in the static intervals and the semi-static intervals is determined, and the number of valid subframes in the static intervals and the semi-static intervals is determined according to the number of invalid subframes. Further, the start subframe position and the end subframe position corresponding to the position of the current subframe are determined. By adopting the technical solution, the problems of large calculation amount, complex operation, etc. existing in determining the positions of the start subframe and the end subframe of the subframes (such as NPDCCH and NPDSCH) in the related art are solved. The present disclosure provides a scheme to determine the start subframe position and end subframe position of the subframe with a small amount of calculation and simple operation.

In the embodiment of the present disclosure, the first determining module 30 is configured to obtain a preconfigured maximum number of repetitions of subframe; obtain a position of a temporary end subframe of the current subframe by adding the maximum number of repetitions to the position of the current subframe; and determine the static intervals and the semi-static intervals according to the position of the current subframe and the position of the temporary end subframe.

In the embodiment of the present disclosure, the first determining module 30 is configured to determine the static intervals and the semi-static intervals according to the position of the current subframe and the position of the temporary end subframe in the following way. The static intervals and the semi-static intervals are determined between the position of the current subframe and the position of the end subframe according to a preset cycle.

In the embodiment of the present disclosure, the second determining module 32 is configured to determine a number of invalid subframes in the static intervals and determine a number of invalid subframes in the semi-static intervals by traversing the semi-static intervals; and determine the number of valid subframes in the static intervals and the semi-static intervals according to the number of invalid subframes in the static intervals and the number of invalid subframes in the semi-static intervals.

In the claimed embodiment of the present disclosure, the second determining module 32 is configured to determine the number of invalid subframes in the static intervals and the semi-static intervals in the following way. A number of invalid subframes in first static intervals is determined according to a cycle of the static intervals and a type of the invalid subframes, and the number of invalid subframes in the first static intervals is taken as the number of invalid subframes in the static intervals. The semi-static intervals are divided into N second static intervals and M first semi-static intervals, where the M and the N are positive integers. A number of invalid subframes in the N second static intervals is determined according to a cycle of the N second static intervals and the type of the invalid subframes. A number of invalid subframes in the M first semi-static intervals is determined by traversing the first semi-static intervals.

In the embodiment of the present disclosure, the second determining module 32 is configured to determine the number of valid subframes in the static intervals and semi-static intervals according to the number of invalid subframes in the following way. The number of valid subframes in the static intervals and the semi-static intervals is determined according to the number of invalid subframes in the first static intervals, the number of invalid subframes in the N second static intervals and the number of invalid subframes in the M first semi-static intervals.

In the embodiment of the present disclosure of the present disclosure, since NB has a repetitive function, for the computer terminal, if NPDCCH data or NPDSCH data may be obtained in advance, there is no need to continue to receive downlink data so as to save the power. Therefore, it is required to calculate the end time in advance. A conventional way for determining the valid subframes is performed subframe by subframe, so that the more subframes, the longer it takes. However, timing in the downlink processing is quite limit, and many complex processes need to be completed within 1ms, especially in a dual HARQ scheduling scenario. If the subframe-by-subframe determination method is adopted, the timing does not meet the requirements. For a base station side, a space-for-time method may be used to calculate the validity of all subframes in a superframe (10240 subframes) in advance. However, a terminal side also has high requirements for space, so the space-for-time method may not be adopted.

Through the above technical schemes of the embodiment of the present disclosure, the calculation efficiency is greatly improved to meet the requirements of downlink processing on the terminal side.

There are two types of so-called invalid subframes defined by a protocol. The first type is static (which has a fixed position), such as a subframe 0 of a physical broadcast channel (PBCH), a subframe 5 of a primary synchronization signal (PSS), and a subframe 9 of an even frame of a secondary synchronization signal (SSS).

The second type is semi-static (the position of which is related to configuration), such as a SIB 1 subframe, a SI subframe, a GAP subframe and an invalid subframe indicated by a bitmap.

Semi-static scenarios are also regular, that is, cyclic, and configuration parameters have a specified range.

In the embodiment of the present disclosure, for both determining the end subframe position and calculating the number of valid subframes from the current subframe to the start subframe, only the number of valid subframes is required to obtain, and there is no need to accurately obtain the specific function of each subframe. Therefore, the embodiment of the present disclosure utilizes the cyclicity of invalid downlink subframes to simplify the calculation, and changes the way of traversing all intervals to a few designated semi-static intervals for calculation, while the number of invalid subframes in the static intervals can be quickly obtained. Finally, the number of traversals is reduced.

Actually, for the so-called static intervals, the number of valid downlink subframes in these intervals may be determined quickly. The invalid downlink subframes herein are subframes with another characteristic, such as the SIB1 subframe. The occurrence times and positions of the invalid downlink subframes are fixed in a cycle. Therefore, the number of the invalid subframes may be determined, and it will not change with different configuration parameters and thus may be quickly obtained by multiplication.

In this way, the calculation of a large interval to be may be decomposed into calculations of at most one large static interval and two small semi-static intervals. Each of the two semi-static intervals has one static boundary, that is, only one boundary is required to be calculated according to the configuration. Finally, the amount of calculation for a large interval is simplified to a single-boundary calculation for two small intervals, and other calculation for static intervals may be obtained by the most basic multiplication.

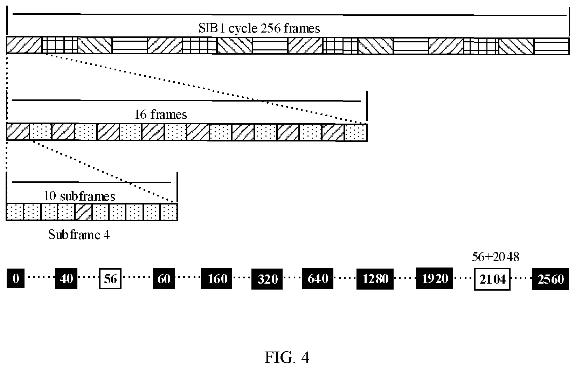

The following describes the determination process of the subframe position by way of illustration. As shown in FIG. 4, the SIB1 is taken as an invalid subframe. According to the current configuration, a physical cell identity (PCID) is 0, and a repeated configuration of the SIB1 is 640 subframes; Rmax is configured as 2048 subframes. The current time is subframe 56, and the position of the ending subframe is calculated (i.e., counting from the current subframe to the time when the valid subframe is 2048).

Based on the subframe 56 at the current time, an initial value of the temporary end subframe is calculated as 2104 (2048+56) subframe first. In a first round, the number of the SIB1 subframes in this interval is calculated, and the rest are all valid subframes. The position shown in FIG. 4 may be obtained by the operation of division and modulo.

There are stable cycles [640, 1280] and [1280, 1920] between the subframe 56 and a subframe 2104 with a cycle of 640. The number of SIB1 subframes in this interval is 16 (8*2, there are two schedules of a total of 16frames in FIG. 4), thus reducing1280 times for traversing, i.e. the traversing the interval [640, 1920] is avoided. The remaining intervals to be determined become [56, 640] and [1280, 2104].

In the interval [56, 640], there is a subframe 160 in the 640 subframe under the current SIB1 configuration. The location is different for different PCIDs. Taking PCID=0 as an example, a valid subframe range of the PCID is [0, 160], that is, the number of SIB1 subframe between [160, 640] is 0, and thus the times for traversing is reduced by 480.

In the interval [56, 160], there are 8 frames in the subframe [0,160] carrying the SIB1. The division and modulo are performed again by taking 20 subframes as an interval. A simplified analysis is performed on the intervals [56, 60], [60 160]. [60,160] is a complete interval, and there are 5 SIB1 subframes whether it is an odd frame or an even frame.

A remaining interval for analysis is [56, 60]. The SIB1 is fixedly carried by a 4 subframe. When the PCID is 0, a position where the SIB1 is carried in this interval is subframe 44, so there is no SIB1 subframe in the interval [56, 60].

In this way, the SIB1 subframes between the subframe 56 and the subframe 2104 are quickly calculated, that is, the number of invalid subframes is 21 (16+0+5+0). The temporary initial values established in the first round are all based on valid values, so that a second round of calculation is required. The number of invalid subframes obtained in the first round is added to the end position of the previous round as a new end position. The interval of this round is [2104, 2125 (2104+21)]. It can be seen that an interval length of the second round has been much shorter. This round of interval calculation may be performed by traversing the interval. If the interval length is still large after the second round, a quick determination similar to that of the first round continues to be used. After each round of determination, the interval required to be studied may be exponentially reduced, greatly reducing the amount of calculation.

The algorithms for the SI subframe, the GAP subframe and the invalid subframe indicated by the bitmap are similar to that for SIB1. If these invalid subframes are configured, the determination on these invalid subframes may be made synchronously.

By adopting the above technical solution, the calculation efficiency can be greatly improved, and the efficiency increases as the interval for calculation becomes greater. When the Rmax is configured to be 2048, consumption on the instruction for calculating the end time can be reduced to 1/100, which fully meets the timing requirements for each subframe processing. With this method, the end subframe position can be calculated in advance while ensuring that the current processing is normal. In this way, an energy-saving mode can be entered early and the effect of power saving can be achieved.

Some embodiments of the present disclosure further provide a computer-readable storage medium including a program stored therein. Herein, when running on the computer, the program executes the method described in any one of the above.

Optionally, in this embodiment, the storage medium may be set to store program codes for executing the following steps. In step S1, static intervals and semi-static intervals of a search space corresponding to a current subframe is determined according to a position of the current subframe. In step S2, a number of invalid subframes in the static intervals and the semi-static intervals is determined, and a number of valid subframes in the static intervals and the semi-static intervals is determined according to the number of invalid subframes. In step S3, a start subframe position and an end subframe position corresponding to the position of the current subframe are determined according to the number of invalid subframes and the number of valid subframes.

Optionally, in this embodiment, the storage medium may include but is not limited to a USB flash disk, a ROM, a RAM, a mobile hard disk, a magnetic disk or an optical disk, and other media that may store the program code.

Some embodiments of the present disclosure further provide an electronic apparatus including a memory and a processor. A computer program is stored in the memory, and the processor is configured to run the computer program to execute the steps in any of the above method embodiments.

Optionally, the electronic apparatus may further include a transmission device and an input/output device, where the transmission device is connected with the processor and the input/output device is connected with the processor.

Optionally, in this embodiment, the processor may be configured to execute the following steps through the computer program. In step S1, static intervals and semi-static intervals of a search space corresponding to a current subframe is determined according to a position of the current subframe. In step S2, a number of invalid subframes in the static intervals and the semi-static intervals is determined, and a number of valid subframes in the static intervals and the semi-static intervalsis determined according to the number of invalid subframes. In step S3, a start subframe position and an end subframe position corresponding to the position of the current subframe are determined according to the number of invalid subframes and the number of valid subframes.

It should be understood by those having ordinary skill in the art that a plurality of modules or steps of the present disclosure above may be realized by a general computing device, which may be concentrated on a single computing device or distributed on a network composed of a plurality of computing devices. Alternatively, the above multiple modules or steps may be realized by a program code executable by the computing device, so that they may be stored in a storage apparatus to be executed by the computing device. In some cases, the steps shown or described may be executed in a different order from here, or they may be made into a plurality of integrated circuit modules respectively, or a plurality of modules or steps among them may be made into a single integrated circuit module. In this way, the present disclosure is not limited to any specified combination of hardware and software.

## Claims

1. A subframe position determination method, comprising:
determining static intervals and semi-static intervals of a search space corresponding to a current subframe according to a position of the current subframe (S202);
determining a number of invalid subframes in the static intervals and the semi-static intervals, and determining a number of valid subframes in the static intervals and the semi-static intervals according to the number of invalid subframes (S204); and
determining a start subframe position and an end subframe position corresponding to the position of the current subframe according to the number of invalid subframes and the number of valid subframes (S206);
wherein determining the number of invalid subframes in the static intervals and the semi-static intervals comprises:
determining a number of invalid subframes in first static intervals according to a cycle of the static intervals and a type of the invalid subframes, and taking the number of invalid subframes in the first static intervals as a number of invalid subframes in the static intervals;
dividing the semi-static intervals into N second static intervals and M first semi-static intervals, wherein M and N are positive integers respectively;
determining a number of invalid subframes in the N second static intervals according to a cycle of the N second static intervals and the type of the invalid subframes; and
determining a number of invalid subframes in the M first semi-static intervals by traversing the first semi-static intervals.

2. The method according to claim 1, wherein determining the static intervals and the semi-static intervals of the search space corresponding to the current subframe according to the current subframe comprises:
obtaining a preconfigured maximum number of repetitions of subframe;
obtaining a position of a temporary end subframe of the current subframe by adding the maximum number of repetitions to the position of the current subframe; and
determining the static intervals and the semi-static intervals according to the position of the current subframe and the position of the temporary end subframe.

3. The method according to claim 2, wherein determining the static intervals and the semi-static intervals according to the position of the current subframe and the position of the temporary end subframe comprises:
determining the static intervals and the semi-static intervals between the position of the current subframe and the position of the temporary end subframe according to a preset cycle.

4. The method according to claim 1, wherein determining the number of invalid subframes in the static intervals and the semi-static intervals and determining the number of valid subframes in the static intervals and the semi-static intervals according to the number of invalid subframes comprises:
determining a number of invalid subframes in the static intervals and determining a number of invalid subframes in the semi-static intervals by traversing the semi-static intervals; and
determining the number of valid subframes in the static intervals and the semi-static intervals according to the number of invalid subframes in the static intervals and the number of invalid subframes in the semi-static intervals.

5. The method according to claim 1, wherein determining the number of valid subframes in the static intervals and the semi-static intervals according to the number of invalid subframes comprises:
determining the number of valid subframes in the static intervals and the semi-static intervals according to the number of invalid subframes in the first static intervals, the number of invalid subframes in the N second static intervals and the number of invalid subframes in the M first semi-static intervals.

6. A subframe position determination apparatus, comprising:
a first determining module (30) configured to determine static intervals and semi-static intervals of a search space corresponding to a current subframe according to a position of the current subframe;
a second determining module (32) configured to determine a number of invalid subframes in the static intervals and the semi-static intervals, and determine a number of valid subframes in the static intervals and the semi-static intervals according to the number of invalid subframes; and
a third determining module (34) configured to determine a start subframe position and an end subframe position corresponding to the position of the current subframe according to the number of invalid subframes and the number of valid subframes;
wherein the second determining module 32 is configured to determine the number of invalid subframes in the static intervals and the semi-static intervals in the following way:
determining a number of invalid subframes in first static intervals according to a cycle of the static intervals and a type of the invalid subframes, and taking the number of invalid subframes in the first static intervals as a number of invalid subframes in the static intervals;
dividing the semi-static intervals into N second static intervals and M first semi-static intervals, wherein M and N are positive integers respectively;
determining a number of invalid subframes in the N second static intervals according to a cycle of the N second static intervals and the type of the invalid subframes; and
determining a number of invalid subframes in the M first semi-static intervals by traversing the first semi-static intervals.

7. The apparatus according to claim 6, wherein the first determining module is configured to obtain a preconfigured maximum number of repetitions of subframe; obtain a position of a temporary end subframe of the current subframe by adding the maximum number of repetitions to the position of the current subframe; and determine the static intervals and the semi-static intervals according to the position of the current subframe and the position of the temporary end subframe.

8. A computer-readable storage medium storing a computer program therein, wherein, the computer program is configured to execute the method according to any one of claims 1 to 5 when running.

9. An electronic apparatus comprising a memory and a processor, wherein a computer program is stored in the memory, and the processor is configured to run the computer program to execute the method according to any one of claims 1 to 5.

## Patentansprüche

1. Unterrahmenpostionsbestimmungsverfahren, umfassend:
Bestimmen von statischen Intervallen und halbstatischen Intervallen eines Suchraums, der einem aktuellen Unterrahmen entspricht, gemäß einer Position des aktuellen Unterrahmens (S202);
Bestimmen einer Anzahl ungültiger Unterrahmen in den statischen Intervallen und den halbstatischen Intervallen, und Bestimmen einer Anzahl gültiger Unterrahmen in den statischen Intervallen und den halbstatischen Intervallen gemäß der Anzahl ungültiger Unterrahmen (S204); und
Bestimmen einer Startunterrahmenposition und einer Endunterrahmenposition, die der Position des aktuellen Unterrahmens entsprechen, gemäß der Anzahl ungültiger Unterrahmen und der Anzahl gültiger Unterrahmen (S206);
wobei das Bestimmen der Anzahl ungültiger Unterrahmen in den statischen Intervallen und den halbstatischen Intervallen umfasst:
Bestimmen einer Anzahl ungültiger Unterrahmen in ersten statischen Intervallen gemäß einem Zyklus der statischen Intervalle und einer Art der ungültigen Unterrahmen, und Nehmen der Anzahl ungültiger Unterrahmen in den ersten statischen Intervallen als eine Anzahl ungültiger Unterrahmen in den statischen Intervallen;
Aufteilen der halbstatischen Intervalle in N zweite statische Intervalle und M erste halbstatische Intervalle, wobei M und N jeweils positive ganze Zahlen sind;
Bestimmen einer Anzahl ungültiger Unterrahmen in den N-sekündigen statischen Intervallen gemäß einem Zyklus der N-sekündigen statischen Intervalle und der Art der ungültigen Unterrahmen; und
Bestimmen einer Anzahl ungültiger Unterrahmen in den M ersten halbstatischen Intervallen durch Durchlaufen der ersten halbstatischen Intervalle.

2. Verfahren nach Anspruch 1, wobei das Bestimmen der statischen Intervalle und der halbstatischen Intervalle des Suchraums, die dem aktuellen Unterrahmen entsprechen, gemäß dem aktuellen Unterrahmen umfasst:
Erhalten einer vorkonfigurierten maximalen Anzahl von Wiederholungen des Unterrahmens;
Erhalten einer Position eines temporären Endunterrahmens des aktuellen Unterrahmens durch Addieren der maximalen Anzahl von Wiederholungen zu der Position des aktuellen Unterrahmens; und
Bestimmen der statischen Intervalle und der halbstatischen Intervalle gemäß der Position des aktuellen Unterrahmens und der Position des temporären Endunterrahmens.

3. Verfahren nach Anspruch 2, wobei das Bestimmen der statischen Intervalle und der halbstatischen Intervalle gemäß der Position des aktuellen Unterrahmens und der Position des temporären Endunterrahmens umfasst:
Bestimmen der statischen Intervalle und der halbstatischen Intervalle zwischen der Position des aktuellen Unterrahmens und der Position des temporären Endunterrahmens gemäß einem voreingestellten Zyklus.

4. Verfahren nach Anspruch 1, wobei das Bestimmen der Anzahl ungültiger Unterrahmen in den statischen Intervallen und den halbstatischen Intervallen und das Bestimmen der Anzahl gültiger Unterrahmen in den statischen Intervallen und den halbstatischen Intervallen gemäß der Anzahl ungültiger Unterrahmen umfasst:
Bestimmen einer Anzahl ungültiger Unterrahmen in den statischen Intervallen und Bestimmen einer Anzahl ungültiger Unterrahmen in den semistatischen Intervallen durch Durchlaufen der semistatischen Intervalle; und
Bestimmen der Anzahl gültiger Unterrahmen in den statischen Intervallen und den halbstatischen Intervallen gemäß der Anzahl ungültiger Unterrahmen in den statischen Intervallen und der Anzahl ungültiger Unterrahmen in den halbstatischen Intervallen.

5. Verfahren nach Anspruch 1, wobei das Bestimmen der Anzahl gültiger Unterrahmen in den statischen Intervallen und den halbstatischen Intervallen gemäß der Anzahl ungültiger Unterrahmen umfasst:
Bestimmen der Anzahl gültiger Unterrahmen in den statischen Intervallen und den halbstatischen Intervallen gemäß der Anzahl ungültiger Unterrahmen in den ersten statischen Intervallen, der Anzahl ungültiger Unterrahmen in den N zweiten statischen Intervallen und der Anzahl ungültiger Unterrahmen in den M ersten halbstatischen Intervallen.

6. Unterrahmenpositionsbestimmungseinrichtung, umfassend:
ein erstes Bestimmungsmodul (30), das konfiguriert ist, um statische Intervalle und halbstatische Intervalle eines Suchraums, der einem aktuellen Unterrahmen entspricht, gemäß einer Position des aktuellen Unterrahmens zu bestimmen;
ein zweites Bestimmungsmodul (32), das konfiguriert ist, um eine Anzahl ungültiger Unterrahmen in den statischen Intervallen und den halbstatischen Intervallen zu bestimmen und eine Anzahl gültiger Unterrahmen in den statischen Intervallen und den halbstatischen Intervallen gemäß der Anzahl ungültiger Unterrahmen zu bestimmen; und
ein drittes Bestimmungsmodul (34), das konfiguriert ist, um eine Startunterrahmenposition und eine Endunterrahmenposition gemäß der Position des aktuellen Unterrahmens gemäß der Anzahl ungültiger Unterrahmen und der Anzahl gültiger Unterrahmen zu bestimmen;
wobei das zweite Bestimmungsmodul 32 konfiguriert ist, um die Anzahl ungültiger Unterrahmen in den statischen Intervallen und den halbstatischen Intervallen auf die folgende Weise zu bestimmen:
Bestimmen einer Anzahl ungültiger Unterrahmen in ersten statischen Intervallen gemäß einem Zyklus der statischen Intervalle und einer Art der ungültigen Unterrahmen, und Nehmen der Anzahl ungültiger Unterrahmen in den ersten statischen Intervallen als eine Anzahl ungültiger Unterrahmen in den statischen Intervallen;
Aufteilen der halbstatischen Intervalle in N zweite statische Intervalle und M erste halbstatische Intervalle, wobei M und N jeweils positive ganze Zahlen sind;
Bestimmen einer Anzahl ungültiger Unterrahmen in den N-sekündigen statischen Intervallen gemäß einem Zyklus der N-sekündigen statischen Intervalle und der Art der ungültigen Unterrahmen; und
Bestimmen einer Anzahl ungültiger Unterrahmen in den M ersten halbstatischen Intervallen durch Durchlaufen der ersten halbstatischen Intervalle.

7. Einrichtung nach Anspruch 6, wobei das erste Bestimmungsmodul konfiguriert ist, um eine vorkonfigurierte maximale Anzahl von Wiederholungen des Unterrahmens zu erhalten; Erhalten einer Position eines temporären Endunterrahmens des aktuellen Unterrahmens durch Hinzufügen der maximalen Anzahl von Wiederholungen zu der Position des aktuellen Unterrahmens; und Bestimmen der statischen Intervalle und die halbstatischen Intervalle gemäß der Position des aktuellen Unterrahmens und der Position des temporären Endunterrahmens.

8. Computerlesbares Speicherungsmedium, das ein Computerprogramm darin speichert, wobei das Computerprogramm konfiguriert ist, um das Verfahren nach einem der Ansprüche 1 bis 5 auszuführen, wenn es läuft.

9. Elektronische Einrichtung, umfassend einen Speicher und einen Prozessor, wobei ein Computerprogramm auf dem Speicher gespeichert ist und der Prozessor konfiguriert ist, um das Computerprogramm laufen zu lassen, um das Verfahren nach einem der Ansprüche 1 bis 5 auszuführen.

## Revendications

1. Procédé de détermination de position de sous-trame, comprenant :
la détermination d'intervalles statiques et d'intervalles semi-statiques d'un espace de recherche correspondant à une sous-trame actuelle selon une position de la sous-trame actuelle (S202) ;
la détermination d'un nombre de sous-trames non valides dans les intervalles statiques et les intervalles semi-statiques, et la détermination d'un nombre de sous-trames valides dans les intervalles statiques et les intervalles semi-statiques selon le nombre de sous-trames non valides (S204) ; et
la détermination d'une position de sous-trame de début et d'une position de sous-trame de fin correspondant à la position de la sous-trame actuelle selon le nombre de sous-trames non valides et du nombre de sous-trames valides (S206) ;
dans lequel la détermination du nombre de sous-trames non valides dans les intervalles statiques et les intervalles semi-statiques comprend :
la détermination d'un nombre de sous-trames non valides dans des premiers intervalles statiques selon un cycle des intervalles statiques et un type de sous-trames non valides, et la prise du nombre de sous-trames non valides dans les premiers intervalles statiques en guise de nombre de sous-trames non valides dans les intervalles statiques ;
la division des intervalles semi-statiques en N seconds intervalles statiques et M premiers intervalles semi-statiques, M et N étant respectivement des nombres entiers positifs ;
la détermination d'un nombre de sous-trames non valides dans les N seconds intervalles statiques selon un cycle des N seconds intervalles statiques et du type des sous-trames non valides ; et
la détermination d'un nombre de sous-trames non valides dans les M premiers intervalles semi-statiques en parcourant les premiers intervalles semi-statiques.

2. Procédé selon la revendication 1, dans lequel la détermination des intervalles statiques et des intervalles semi-statiques de l'espace de recherche correspondant à la sous-trame actuelle selon la sous-trame actuelle comprend :
l'obtention d'un nombre maximal préconfiguré de répétitions de sous-trame ;
l'obtention d'une position d'une sous-trame de fin temporaire de la sous-trame actuelle en ajoutant le nombre maximal de répétitions à la position de la sous-trame actuelle ; et
la détermination des intervalles statiques et des intervalles semi-statiques selon la position de la sous-trame actuelle et la position de la sous-trame de fin temporaire.

3. Procédé selon la revendication 2, dans lequel la détermination des intervalles statiques et des intervalles semi-statiques selon la position de la sous-trame actuelle et la position de la sous-trame de fin temporaire comprend :
la détermination des intervalles statiques et des intervalles semi-statiques entre la position de la sous-trame actuelle et la position de la sous-trame de fin temporaire selon un cycle prédéfini.

4. Procédé selon la revendication 1, dans lequel la détermination du nombre de sous-trames non valides dans les intervalles statiques et les intervalles semi-statiques et la détermination du nombre de sous-trames valides dans les intervalles statiques et les intervalles semi-statiques selon le nombre de sous-trames non valides comprennent :
la détermination d'un nombre de sous-trames non valides dans les intervalles statiques et la détermination d'un nombre de sous-trames non valides dans les intervalles semi-statiques en parcourant les intervalles semi-statiques ; et
la détermination du nombre de sous-trames valides dans les intervalles statiques et les intervalles semi-statiques selon le nombre de sous-trames non valides dans les intervalles statiques et le nombre de sous-trames non valides dans les intervalles semi-statiques.

5. Procédé selon la revendication 1, dans lequel la détermination du nombre de sous-trames valides dans les intervalles statiques et les intervalles semi-statiques selon le nombre de sous-trames non valides comprend :
la détermination du nombre de sous-trames valides dans les intervalles statiques et les intervalles semi-statiques selon le nombre de sous-trames non valides dans les premiers intervalles statiques, le nombre de sous-trames non valides dans les N seconds intervalles statiques et le nombre de sous-trames non valides dans les M premiers intervalles semi-statiques.

6. Appareil de détermination de position de sous-trame, comprenant :
un premier module de détermination (30) configuré pour déterminer des intervalles statiques et des intervalles semi-statiques d'un espace de recherche correspondant à une sous-trame actuelle selon une position de la sous-trame actuelle ;
un deuxième module de détermination (32) configuré pour déterminer un nombre de sous-trames non valides dans les intervalles statiques et les intervalles semi-statiques, et déterminer un nombre de sous-trames valides dans les intervalles statiques et les intervalles semi-statiques selon le nombre de sous-trames non valides ; et
un troisième module de détermination (34) configuré pour déterminer une position de sous-trame de début et une position de sous-trame de fin correspondant à la position de la sous-trame actuelle selon le nombre de sous-trames non valides et le nombre de sous-trames valides ;
dans lequel le deuxième module de détermination 32 est configuré pour déterminer le nombre de sous-trames non valides dans les intervalles statiques et les intervalles semi-statiques de la manière suivante :
la détermination d'un nombre de sous-trames non valides dans des premiers intervalles statiques selon un cycle des intervalles statiques et un type de sous-trames non valides, et la prise du nombre de sous-trames non valides dans les premiers intervalles statiques en guise de nombre de sous-trames non valides dans les intervalles statiques ;
la division des intervalles semi-statiques en N seconds intervalles statiques et M premiers intervalles semi-statiques, M et N étant respectivement des nombres entiers positifs ;
la détermination d'un nombre de sous-trames non valides dans les N seconds intervalles statiques selon un cycle des N seconds intervalles statiques et du type des sous-trames non valides ; et
la détermination d'un nombre de sous-trames non valides dans les M premiers intervalles semi-statiques en parcourant les premiers intervalles semi-statiques.

7. Appareil selon la revendication 6, dans lequel le premier module de détermination est configuré pour obtenir un nombre maximal préconfiguré de répétitions de la sous-trame ; obtenir une position d'une sous-trame de fin temporaire de la sous-trame actuelle en ajoutant le nombre maximal de répétitions à la position de la sous-trame actuelle ; et déterminer les intervalles statiques et les intervalles semi-statiques selon la position de la sous-trame actuelle et la position de la sous-trame de fin temporaire.

8. Support de stockage lisible par ordinateur stockant un programme informatique à l'intérieur de celui-ci, dans lequel, le programme informatique est configuré pour exécuter le procédé selon l'une quelconque des revendications 1 à 5 lorsqu'il fonctionne.

9. Appareil électronique comprenant une mémoire et un processeur, dans lequel un programme d'ordinateur est stocké dans la mémoire, et le processeur est configuré pour faire tourner le programme d'ordinateur pour exécuter le procédé selon l'une quelconque des revendications 1 à 5.
